(19) Europäisches Patentamt
European Patent Office
Office européen des brevets

(11) **EP 2 558 340 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **11705842.0**

(22) Anmeldetag: **15.02.2011**

(51) Int Cl.:
**B60T 8/1755** *(2006.01)* **B60W 10/184** *(2012.01)*
**B60W 30/045** *(2012.01)* **B60W 10/06** *(2006.01)*
**B60W 10/02** *(2006.01)* **B60W 30/02** *(2012.01)*
**B62J 27/00** *(2006.01)* **B60W 10/20** *(2006.01)*

(86) Internationale Anmeldenummer:
**PCT/EP2011/052180**

(87) Internationale Veröffentlichungsnummer:
**WO 2011/128130 (20.10.2011 Gazette 2011/42)**

(54) **VERFAHREN ZUM STABILISIEREN EINES ZWEIRADS BEI SEITLICH RUTSCHENDEM HINTERRAD**

METHOD FOR STABILIZING A TWO-WHEELED VEHICLE WITH A LATERALLY SLIPPING REAR WHEEL

PROCÉDÉ DE STABILISATION D'UNE BICYCLETTE LORSQUE LA ROUE ARRIÈRE DÉRAPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2010 DE 102010003951**

(43) Veröffentlichungstag der Anmeldung:
**20.02.2013 Patentblatt 2013/08**

(73) Patentinhaber: **Robert Bosch GmbH**
**70442 Stuttgart (DE)**

(72) Erfinder: **LEMEJDA, Markus**
**71642 Ludwigsburg (DE)**

(56) Entgegenhaltungen:
**EP-A1- 0 808 732    DE-A1- 10 235 378**
**DE-A1- 10 350 046    DE-A1-102007 061 114**
**DE-A1-102008 001 970**

EP 2 558 340 B1

**Beschreibung**

Stand der Technik

Die Erfindung betrifft ein Verfahren zum Stabilisieren eines Zweirads, insbesondere eines Motorrads in Fahrsituationen, in denen das Zweirad übersteuert.

Bei Kurvenfahrten mit einem Zweirad kann es vorkommen, dass das Hinterrad in der Kurve seitlich wegrutscht. Das Zweirad übersteuert dann und folgt nicht mehr der vom Fahrer gewünschten Bewegungsbahn. Außerdem reduziert sich die Zentrifugalkraft, und das Zweirad kippt auf die Kurveninnenseite. Derartige Fahrsituationen führen daher häufig zu Stürzen. Ursache für ein solches Übersteuern kann z.B. eine zu hohe Kurvengeschwindigkeit, zu viel Antriebskraft, ein zu hohes Brems- oder Schleppmoment am Hinterrad oder ein zu niedriger Reibwert der Fahrbahn sein. Bei einem übersteuernden Zweirad besteht insbesondere auch die Gefahr, bei wieder zunehmendem Fahrbahnreibwert einen Überschlag nach Kurvenaußen zu erleiden (Highsider). Dies kann zu besonders schweren Unfällen führen.

Moderne PKW werden in solchen Fahrsituationen mittels einer Fahrdynamikregelung ESP (Elektronisches Stabilitätsprogramm) stabilisiert.

Aus dem gattungsbildenden Dokument DE 10 2008 001 970 A1 ist eine Fahrdynamikregelung für Zweiräder bekannt, bei welcher mit einem Neigungssensor und einem Schwimmwinkelsensor ein Neigungswinkel und ein Schwimmwinkel des Kraftfahrzeuges relativ zur Fahrbahn erfasst und verarbeitet werden und in Abhängigkeit dieser Signale mittels einer Steuervorrichtung Stabilisierungseingriffe in die Fahrbewegung durchgeführt werden.

In kritischen Fahrsituationen wie etwa während einer Kurvenfahrt auf glatter Fahrbahn, führen Stabilisierungseingriffe, teilweise nicht zu einer gewünschten Stabilisierung eines Zweirads, da die Einflüsse eines Stabilisierungseingriff auf die tatsächliche räumliche Lage eines Zweirads oft unvorhersehbar ist.

Offenbarung der Erfindung

Es ist daher die Aufgabe der vorliegenden Erfindung, ein verbessertes Verfahren zu schaffen, mittels dessen das seitliche Wegrutschen des Hinterrades bei einem Zweiradfahrzeug erkannt und das Zweiradfahrzeug wieder stabilisiert werden kann.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, eine das Übersteuern des Zweirads beschreibende Größe, insbesondere den Schwimmwinkel oder die Schwimmwinkeländerung während des Fahrbetriebs zu ermitteln und eine Fahrdynamikregelung durchzuführen, wenn der Schwimmwinkel oder die Schwimmwinkeländerung einen vorgegebenen Schwellenwert übersteigen, wobei ein Schwimmwinkel und/oder ein Schräglaufwinkel und/oder eine Schwimmwinkeländerung und/oder eine Schräglaufwinkeländerung auf einen vorgegebenen Schwellenwert geregelt wird. Als Stabilisierungseingriff kann mindestens eine der folgenden Maßnahmen automatisch angewendet werden:

1. Aufbringen eines Lenkmomentes auf die Lenkung des Zweirads in Richtung Kurveninnenseite: Durch die spezielle Fahrphysik eines Einspurfahrzeuges wird ein größerer Kurvenradius eingeleitet, wodurch schließlich die notwendige Seitenführungskraft des Hinterrades abgebaut wird. Das Lenkmoment kann z. B. über einen Lenkmomentsteller und/oder indirekt über die Erhöhung des Bremsdruckes am Vorderrad erzeugt werden.

2. Reduzieren der Längskraft am Hinterrad, um dessen Vermögen zur Aufnahme von Seitenführungskraft zu verbessern: Bei zu viel Antriebskraft am Hinterrad wird das Motormoment automatisch reduziert und/oder der Bremsdruck erhöht. Bei zu viel Bremskraft wird das Motormoment erhöht und/oder der Bremsdruck verringert. Bei abhebendem Hinterrad wird der Bremsdruck am Vorderrad erniedrigt. In allen Fällen kann das Hinterrad mehr Seitenführungskraft aufnehmen.

3. Verlangsamen der Fahrzeuggeschwindigkeit: Dies wird über eine Erhöhung des Bremsdrucks an den Rädern oder eine Reduktion des Motormoments erreicht.

Gemäß einer ersten Ausführungsform der Erfindung wird der Schwimmwinkel oder die Schwimmwinkeländerung mittels einer Sensorik ermittelt, die einen oder mehrere der folgenden Sensoren umfasst: Sensoren zur Erfassung der Längsgeschwindigkeit, einen Querbeschleunigungssensor, einen Wankraten- und einen Gierratensensor sowie optional weitere Sensoren zur genaueren Erfassung des Wank- und/oder Nickwinkels.

Bei einem Zweiradfahrzeug ist die seitliche Geschwindigkeit $v_y$ und damit der Schwimmwinkel je nach Einbaulage der Sensoren abhängig von der Wankgeschwindigkeit. Die Sensorik misst also im Allgemeinen einen Schwimmwinkel, der von dem Schräglaufwinkel des Hinterrades abweicht. Um dies zu vermeiden, wird vorgeschlagen, die Messsignale auf den Radaufstandspunkt des Hinterrades als virtuellen Messpunkt zu transformieren. Eine Messung des Schwimmwinkels am Radaufstandspunkt ist weitgehend unabhängig von der Schräglage und der Wankgeschwindigkeit des Zweirads, so dass in das Messergebnis möglichst nur die seitliche Drift des Hinterrades eingeht. Die Transformation erfolgt vorzugsweise mittels eines Algorithmus, der das Bezugssystem auf den Radaufstandspunkt umrechnet. Gemäß einer bevorzugten Ausführungsform der Erfindung fließen erst die transformierten Messwerte, wie z.B. eine Querbeschleunigung oder eine Gierrate in die Berechnung des Schwimmwinkels oder der Schwimmwinkeländerung ein.

Zur Bestimmung des Schwimmwinkels $\beta$ oder der Schwimmwinkeländerung $d\beta/dt$ kann beispielsweise folgende Berechnung durchgeführt werden:

$$dv_y/dt = a_y - \omega_z \cdot v_x + \omega_x \cdot v_z - g \cdot \sin \varphi \cdot \cos \Theta \qquad (1)$$

hierbei bezeichnet

$dv_y/dt$ die Geschwindigkeitsänderung in Quer- bzw. y-Richtung,
$a_y$ die gemessene Querbeschleunigung in y-Richtung,
$\omega_z$ die Gierrate des Fahrzeugs,
$\omega_x$ die Wankrate,
$v_x$ die Fahrzeuglängsgeschwindigkeit,
$v_z$ die Vertikalgeschwindigkeit (alle genannten Größen im Fahrzeugbezugssystem),
g die Erdbeschleunigung,
$\varphi$ den Schräglagen- bzw. Wankwinkel und
$\Theta$ den Nickwinkel, z.B. nach DIN70000.

Wank- und Nickwinkel können beispielsweise mittels Drehraten- und Beschleunigungssensoren oder mittels eines Neigungswinkelsensors bestimmt werden. Da $v_z$ schwer zu ermitteln und normalerweise sehr klein gegenüber $v_y$ ist, kann $v_z$ = 0 m/s als Nährung verwendet werden.

Durch Integration kann die Geschwindigkeit $v_y$ in Querrichtung abgeschätzt werden

$$v_y = v_{y0} + \int dv_y/dt$$

wobei $v_{y0}$ ein Startwert ist. Aus $v_y$ und dem Schräglagenwinkel $\varphi$ ergibt sich nun der Schwimmwinkel bzw. der Schräglaufwinkel im Straßenbezugssystem am Radaufstandspunkt:

$$\beta = v_y/(v_x \cdot \cos \varphi) \qquad (2)$$

Die Schwimmwinkeländerung $d\beta/dt$ ist die zeitliche Ableitung des Schwimmwinkels $\beta$.

Gemäß einer alternativen Ausführungsform können der Schwimmwinkel $\beta$ oder die Schwimmwinkeländerung $d\beta/dt$ auch mittels eines Radar- oder eines optischen Sensors gemessen werden.

Das aufgrund einer Bremsmomentänderung am Vorderrad resultierende Lenkmoment ist stark von der Schräglage des Zweirads, der Fahrzeuggeometrie und vom Reifen abhängig. Gemäß einer Ausführungsform der Erfindung wird daher vorgeschlagen, die Schräglage des Zweirads zu ermitteln und das Lenkmoment über den Bremsdruck an der Vorderradbremse abhängig von der aktuellen Schräglage zu variieren.

Sofern das Zweirad über einen Lenksteller verfügt und ein Lenkmoment auf die Lenkung aufgeprägt wird, ist dieses vorzugsweise derart bemessen, dass es vom Fahrer übersteuert werden kann.

Die Regelung wird vorzugsweise von einem Steuergerät durchgeführt, in dem ein entsprechender Regel-Algorithmus hinterlegt ist.

Die Erfindung wird nachstehend anhand der beigefügten Zeichnung beispielhaft näher erläutert. Es zeigt:

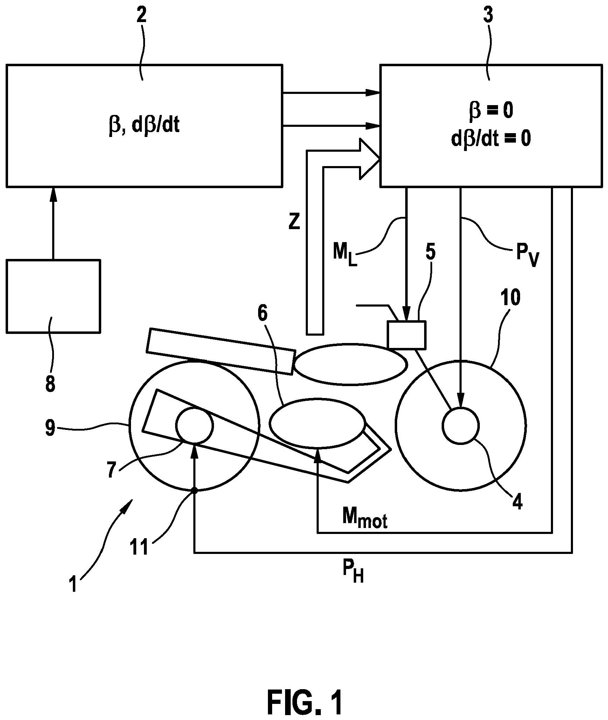

Fig. 1    eine schematische Darstellung eines Motorrads mit einer Fahrdynamikregelung.

Figur 1 zeigt eine schematische Darstellung eines Motorrads 1, sowie verschiedene Komponenten einer Fahrdynamikregelung zum Stabilisieren des Motorrads 1 in Fahrsituationen, in denen das Motorrad 1 übersteuert. Das Regelungssystem umfasst einen oder mehrere Sensoren 2,8 zur Schwimmwinkelbestimmung, sowie wenigstens ein Stellglied 4,5,6 und/oder 7, das von einem Schwimmwinkelregler 3 automatisch angesteuert werden kann. In einer Fahrsituation, in der das Hinterrad 9 des Motorrads 1 seitlich ausbricht, greift der Schwimmwinkelregler 3 mittels eines oder mehrerer der Stellglieder 4-7 in den Fahrbetrieb ein.

Das übersteuernde Fahrverhalten des Motorrads 1 wird hier mit Hilfe eines Querbeschleunigungssensors, eines Gierratensensors und eines Wank- und Nickwinkelsensors erkannt, die in einem Block 8 zusammengefasst sind. Wahlweise könnten aber auch Radar-, optische oder auch andere aus dem Stand der Technik bekannte Sensoren eingesetzt werden. Ein Software-Algorithmus, der in Block 2 dargestellt ist, ermittelt aus den Sensorsignalen einen Schwimmwinkel $\beta$ oder eine Schwimmwinkeländerung d$\beta$/dt. Wenn der Schwimmwinkel $\beta$ oder die Schwimmwinkelän-derung d$\beta$/dt einen vorgegebenen Schwellenwert übersteigen, wird der Regler 3 aktiv und regelt die Regelgröße auf einen Soll-Wert.

Als Stellglied der Regelung kann beispielsweise die Vorderradbremse 4, ein Lenksteller 5, der Antriebsmotor 6 oder die Hinterradbremse 7 angesteuert werden. Gegebenenfalls können auch mehrere Stellglieder 4-7 gleichzeitig angesteuert werden. Je nach Regelabweichung gibt der Regler 3 eine entsprechende Stellgröße, wie z.B. einen Vorderrad-Bremsdruck $p_V$, einen Hinterrad-Bremsdruck $p_H$, ein Motormoment $M_{mot}$ oder ein Lenkmoment $M_L$ an das jeweilige Stellglied aus. Sofern der Lenksteller 5 angesteuert wird, ist das Lenkmoment $M_L$ vorzugsweise derart bemessen, dass es vom Fahrer übersteuert werden kann.

Bei einem Regeleingriff an der Vorderradbremse 4 ist die Stärke des Regeleingriffs vorzugsweise abhängig von der Schräglage des Motorrads 1, da das Reaktionsverhalten des Motorrads 1 je nach Schräglage stark unterschiedlich sein kann. Die Schräglage kann beispielsweise mittels eines Wankratensensors gemessen werden.

Der Regler 3 überwacht ferner ständig den aktuellen Fahrzustand des Fahrzeugs mittels einer Reihe von Sensoren, die entsprechende Fahrzustandsgrößen Z liefern.

Steht eine volle 6D-Inertialsensorik mit drei Drehraten- und drei Beschleunigungssensoren, sowie ein GPS-Signal zur Verfügung, kann der Schwimmwinkel noch exakter bestimmt werden.

**Patentansprüche**

1. Verfahren zum Stabilisieren eines Zweirads (1) in Fahrsituationen, in denen das Zweirad (1) übersteuert, wobei eine das Übersteuern des Zweirads (1) beschreibende Größe als Regelgröße ermittelt und eine das Zweirad (1) stabilisierende Regelung (3) durchgeführt wird, **dadurch gekennzeichnet, dass** ein Schwimmwinkel ($\beta$) und/oder ein Schräglaufwinkel und/oder eine Schwimmwinkeländerung (d$\beta$/dt) und/oder eine Schräglaufwinkeländerung auf einen vorgegebenen Soll-Wert geregelt werden, wenn die Regelgröße einen vorgegebenen Schwellenwert überschreitet.

2. Verfahren nach Anspruch 2, **dadurch gekennzeichnet, dass** im Rahmen der Regelung ein Lenkmoment ($M_L$) auf die Lenkung des Zweirads (1) aufgeprägt und/oder der an der Vorderradbremse (4) wirkende Bremsdruck verändert und/oder das Antriebsmoment ($M_{mot}$) am Hinterrad (9) reduziert oder erhöht und/oder der Bremsdruck ($p_H$) am Hinterrad (9) abgebaut oder erhöht wird.

3. Verfahren nach Anspruch 2 oder 3, **dadurch gekennzeichnet, dass** die das Übersteuern des Zweirads (1) beschreibende Größe mit Hilfe von Längsgeschwindigkeitssensoren, wie z.B. Rad-Drehzahlsensoren, eines Querbeschleunigungssensors, eines Gierraten- und Wankratensensors und optional weiterer Sensoren zur Erfassung des Wank- und/oder Nickwinkels (8) bestimmt wird.

4. Verfahren nach Anspruch 4, **dadurch gekennzeichnet, dass** die Messsignale der Sensoren (8) auf einen Radaufstandspunkt (11) des Hinterrades (9) als virtuellen Messpunkt transformiert werden, bevor daraus der Schwimm-winkel ($\beta$) oder die Schwimmwinkeländerung (d$\beta$/dt) bestimmt werden.

5. Verfahren nach einem der vorhergehenden Ansprüche, **dadurch gekennzeichnet, dass** der Schwimmwinkel ($\beta$) oder die Schwimmwinkeländerung (d$\beta$/dt) mittels eines Radarsensors oder eines optischen Sensors gemessen wird.

6. Verfahren nach einem der vorhergehenden Ansprüche, **dadurch gekennzeichnet, dass** die Schräglage des Zweirads (1) ermittelt wird und abhängig von der aktuellen Schräglage der Bremsdruck ($p_V$) am Vorderrad (10) entweder erhöht oder verringert wird.

7. Verfahren nach einem der vorhergehenden Ansprüche, **dadurch gekennzeichnet, dass**, sofern ein Lenkmoment ($M_L$) auf die Lenkung des Zweirads (1) aufgeprägt wird, dieses vom Fahrer übersteuert werden kann.

8. Regelungsvorrichtung (2,3), umfassend Mittel zur Durchführung des Verfahrens nach einem der vorstehenden Ansprüche..

**Claims**

**1.** Method for stabilizing a two-wheeled vehicle (1) in driving situations in which the two-wheeled vehicle (1) oversteers, wherein a variable describing the oversteering of the two-wheeled vehicle (1) is determined as a control variable, and a control process (3) which stabilizes the two-wheeled vehicle (1) is carried out, **characterized in that** a side slip angle ($\beta$) and/or a slip angle and/or a change ($d\beta/dt$) in side slip angle and/or a change in slip angle is adjusted to a predefined setpoint value if the control variable exceeds a defined threshold value.

**2.** Method according to Claim 2, **characterized in that** within the scope of the control process a steering torque ($M_L$) is applied to the steering of the two-wheeled vehicle (1) and/or the brake pressure acting on the front wheel brake (4) is changed and/or the drive torque ($M_{mot}$) at the rear wheel (9) is reduced or increased and/or the brake pressure ($p_H$) at the rear wheel (9) is decreased or increased.

**3.** Method according to Claim 2 or 3, **characterized in that** the variable which describes the oversteering of the two-wheeled vehicle (1) is determined with the aid of longitudinal speed sensors such as e.g. wheel speed sensors, of a lateral acceleration sensor, of a yaw rate and rolling rate sensor and optionally further sensors for detecting the rolling and/or pitching angle (8).

**4.** Method according to Claim 4, **characterized in that** the measurement signals of the sensors (8) are transformed as a virtual measurement point to a wheel contact point (11) of the rear wheel (9) before the side slip angle ($\beta$) or the change ($d\beta/dt$) in the side slip angle is determined therefrom.

**5.** Method according to one of the preceding claims, **characterized in that** the side slip angle ($\beta$) or the change ($d\beta/dt$) in the side slip angle is measured by means of a radar sensor or an optical sensor.

**6.** Method according to one of the preceding claims, **characterized in that** the oblique position of the two-wheeled vehicle (1) is determined and the brake pressure ($p_v$) at the front wheel (10) is either increased or reduced as a function of the current oblique position.

**7.** Method according to one of the preceding claims, **characterized in that** if a steering torque ($M_L$) is applied to the steering of the two-wheeled vehicle (1) the latter can be oversteered by the rider.

**8.** Control device (2, 3) comprising means for carrying out the method according to one of the preceding claims.

**Revendications**

**1.** Procédé de stabilisation d'une moto (1) dans des situations de conduite dans lesquelles la moto (1) est en sous-virage, une grandeur qui décrit le sous-virage de la moto (1) étant déterminée comme grandeur de régulation et une régulation (3) qui stabilise la moto (1) étant exécutée,
**caractérisé en ce que**
un angle de flottement ($\beta$), un angle d'inclinaison, une modification ($d\beta/dt$) de l'angle de flottement et/ou une modification de l'angle d'inclinaison étant régulés à une valeur de consigne prédéterminée si la longueur de régulation dépasse une valeur de seuil prédéterminée.

**2.** Procédé selon la revendication 2, **caractérisé en ce que** dans le cadre de la régulation, un couple de braquage ($M_L$) est appliqué sur la direction de la moto (1), la pression de freinage qui agit sur les freins (4) de la roue avant est modifiée, le couple d'entraînement ($M_{mot}$) appliqué sur la roue arrière (9) est réduit ou augmenté et/ou la pression de freinage ($p_H$) appliquée sur la roue arrière (9) est diminuée ou augmentée.

**3.** Procédé selon les revendications 2 ou 3, **caractérisé en ce que** la grandeur qui décrit le sous-virage de la moto (1) est déterminée à l'aide de capteurs de vitesse longitudinale, par exemple des capteurs de vitesse de rotation de roue, un capteur d'accélération transversal, un capteur de vitesse de lacet et de vitesse de roulis et facultativement d'autres capteurs de détection de l'angle de roulis et/ou de l'angle de tangage (8).

4. Procédé selon la revendication 4, **caractérisé en ce que** les signaux de mesure des capteurs (8) sont transformés sur un point (11) d'appui au sol de la roue arrière (9) qui sert de point de mesure virtuel avant que l'angle de flottement (β) ou une modification (dβ/dt) de l'angle de flottement soient déterminés à partir de là.

5. Procédé selon l'une des revendications précédentes, **caractérisé en ce que** l'angle de flottement (β) ou la modification (dβ/dt) de l'angle de flottement sont mesurés à l'aide d'un capteur radar ou de capteurs optiques.

6. Procédé selon l'une des revendications précédentes, **caractérisé en ce que** la position d'inclinaison de la moto (1) est déterminée et **en ce que** la pression de freinage (pv) appliquée sur la roue avant (10) est augmentée ou diminuée en fonction de la position d'inclinaison effective.

7. Procédé selon l'une des revendications précédentes, **caractérisé en ce que** lorsqu'un couple de braquage ($M_L$) est appliqué sur la direction de la moto (1), ce dernier peut être surmonté par le conducteur.

8. Ensemble de régulation (2, 3) comprenant des moyens permettant la mise en oeuvre du procédé selon l'une des revendications précédentes.

**FIG. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008001970 A1